# EUROPÄISCHE PATENTANMELDUNG

(11) **EP 0 938 998 A2**
(43) Veröffentlichungstag der Anmeldung: **01.09.1999**
(21) Anmeldenummer: 99101518.1
(22) Anmeldetag: 28.01.1999
(51) Int. Cl.: B60N 2/44, B60N 3/00

(54) **Funktionsteil zur Befestigung auf einer Fondsitzbank mit einem Mittenbeckengurt eines Kraftfahrzeugs**

(30) Priorität: 27.02.1998 DE 19808394
(71) Anmelder: Volkswagen Aktiengesellschaft, 38436 Wolfsburg (DE)
(72) Erfinder: Santos, Mauricio, 38442 Wolfsburg (DE)

(57) **Zusammenfassung**

Die Erfindung betrifft ein Funktionsteil (1; 12) zur Befestigung auf einer Fondsitzbank (3; 29) mit einem Mittenbeckengurt (2; 10) eines Kraftfahrzeugs, wobei die Mittenbeckengurtanordnung am mittleren Sitzplatz der Fondsitzbank (3; 29) ein Gurtschloß (4; 20) und eine zugeordnete Gurt-Einsteckzunge (5; 11) am Ende eines längenverstellbaren Beckengurts (2; 10) aufweist, der in Halterungen am Funktionsteil (1; 12) eingreift. Erfindungsgemäß sind als Halterungen am Funktionsteil (1; 12) ein Funktionsteil-Schloß (8; 19) entsprechend dem Gurtschloß (4; 20) zur Aufnahme der Gurt-Einsteckzunge (5; 11) und eine Funktionsteil-Einsteckzunge (9; 18) entsprechend der Gurt-Einsteckzunge (5; 11) zum Einstecken in das Gurtschloß (4; 20) angebracht. Für eine Befestigung werden diese Verbindungen hergestellt und der Beckengurt (2; 10) durch Verkürzen gestrafft.

## Beschreibung

Die Erfindung betrifft ein Funktionsteil zur Befestigung auf einer Fondsitzbank mit einem Mittenbeckengurt eines Kraftfahrzeugs nach dem Oberbegriff des Anspruchs 1.

Ein bekanntes, gattungsgemäßes Funktionsteil als Kinder-Fangtisch (DE 30 20 212 A1) ist mit einem Mittenbeckengurt am mittleren Sitzplatz einer Fondsitzbank eines Kraftfahrzeugs befestigbar. Der Mittenbeckengurt besteht aus zwei an der Fondsitzbank befestigten Gurtteilen, an deren freien Enden je ein Gurtschloß und eine zugeordnete Gurt-Einsteckzunge angeordnet sind. Der Beckengurt ist insgesamt längenverstellbar und greift in eine Halterung am Kinder-Fangtisch ein. Diese Halterung ist hier als frontseitiger, durchgehender Schlitz ausgebildet, in den ein Beckengurtteil für eine Befestigung einzufädeln ist und durch Zusammenstecken des Gurtschlosses mit der Gurt-Einsteckzunge eine Verbindung zum anderen Gurtteil herzustellen ist. Nach einem Straffen des längenverstellbaren Gurtes wird dann der Kinder-Fangtisch in seiner Position festgelegt und gehalten. Der Beckengurt ist somit in dieser Anordnung in sich geschlossen und hat seine übliche Rückhaltefunktion, wobei der Gurt durch den Kinder-Fangtisch in Frontrichtung lediglich in seinen Abmessungen vergrößert und abgepolstert ist. Die Befestigung des Kinder-Fangtisches durch das Einfädeln eines Gurtteils in einen Schlitz ist umständlich und unbequem.

Weiter ist es bekannt, ein Funktionsteil als Adapterteil auf einem Einzelsitz durch zwei Gurtschlösser und zwei zugeordnete Gurt-Einsteckzungen zu befestigen (DE 42 16 925 C2). Dazu sind die zwei Gurtschlösser jeweils an den Seiten eines Einzelsitres und die zwei Gurt-Einsteckzungen entsprechend an der Unterseite des Adapterteils angeordnet. Für eine Befestigung wird dann das Adapterteil mit seinen Einsteckzungen in die beiden Gurtschlösser eingesteckt und dort verrastet. Für eine solche Befestigung ist ein teueres zusätzliches, zweites Gurtschloß an einem Einzelsitz vorzusehen, das sonst in Verbindung mit einem Dreipunktsicherheitsgurt nicht benötigt wird. Eine solche Lösung ist zudem auf die Befestigung eines Funktionsteils an einem mittleren Sitzplatz einer Fondsitzbank nicht übertragbar, da dort die Anordnung von zwei Gurtschlössern störend wäre.

Es ist weiter ein Funktionskasten für den Bordservice bekannt (DE-GM 94 17 823), der auf einen Fahrzeugsitz aufsetzbar ist und dort durch Umschlingung mit einem Dreipunktgurt gehalten wird. Bei einem Dreipunktgurt mit üblicher Aufrollautomatik ist im normalen Fahrbetrieb ohne starke, ruckförmige Belastung auf den Gurt keine stabile Halterung möglich, da der Gurt ohne einzurasten nachgibt.

In einer weiter bekannten Anordnung eines Funktionskastens als Aktenkasten (DE-GM 82 35 195) auf einem Fahrzeugsitz sind Gurte am Funktionskasten angebracht. Für eine Befestigung auf einem Rücksitzplatz werden diese Gurte um Sicherheitsgurtschlösser und Sicherheitsgurtenden geschlungen und über ein Spannschloß gestrafft. Eine solche Schlingverbindung zwischen mehreren Gurten ist nur aufwendig und unbequem anzubringen und macht einen optisch ungünstigen Eindruck.

Aufgabe der Erfindung ist es demgegenüber, ein Funktionsteil zur Befestigung auf einer Fondsitzbank mit einem Mittenbeckengurt eines Fahrzeugs so auszubilden, daß eine einfache Handhabung bei einer sicheren Befestigung möglich ist.

Diese Aufgabe wird mit den Merkmalen des Anspruchs 1 gelöst.

Gemäß Anspruch 1 sind als Halterungen am Funktionsteil ein Funktionsteil-Schloß entsprechend dem Gurtschloß zur Aufnahme der Gurt-Einsteckzunge und eine Funktionsteil-Einsteckzunge entsprechend der Gurt-Einsteckzunge zum Einstecken in das Gurtschloß angebracht. Für eine Befestigung des Funktionsteils am mittleren Sitzplatz der Fondsitzbank wird einfach nur das Funktionsteil-Schloß am Funktionsteil in die Gurt-Einsteckzunge eingesetzt und verrastet. Entsprechend wird die Funktionsteil-Einsteckzunge in das Gurtschloß eingesteckt und verrastet. Der längenverstellbare Beckengurt wird dann durch Verkürzen gestrafft, wodurch das Funktionsteil sicher gehalten ist.

Im Gegensatz zum Stand der Technik wird hier der Mittenbeckengurt nicht selbst durchgehend geschlossen, sondern durch Zwischenschalten des Funktionsteils. Durch diese Zwischenschaltung über eine funktionsteilseitige Einsteckzunge und ein funktionsteilseitiges Schloß werden eine schnelle und bequeme Handhabung beim Befestigen und Lösen des Funktionsteils sowie ein sicherer Halt erreicht.
Bevorzugt werden das Funktionsteil-Schloß und die Funktionsteil-Einsteckzunge am Funktionsteil versenkt angeordnet, so daß keine dieser Halterungen am Funktionsteil vorsteht. Das Funktionsteil kann damit an seiner Unterseite mit einer durchgehenden Fläche ausgebildet sein, so daß keine Gefahr eines Verkratzens der Unterlage bei einem Abstellen des Funktionsteils auftritt. Zudem sind im befestigten Zustand die Halterungen verdeckt, so daß ein optisch gefälliger Eindruck entsteht. Dieser wird insbesondere dann noch verstärkt, wenn das Funktionsteil-Schloß und die Funktionsteil-Einsteckzunge gegenüberliegend nach unten gerichtet sind. Vorteilhaft werden diese Teile in der Nähe der Befestigungspunkte des Mittenbeckengurts, d. h. in heckseitigen Seitenbereichen des Funktionsteils angebracht, so daß eine geeignete Anbindung mit günstigen kurzen Gurtlängen erfolgt.

Die erfindungsgemäße Befestigung ist grundsätzlich für eine Vielzahl von Funktionsteilen verwendbar, die in an sich bekannter Weise in einem Kraftfahrzeug mitgeführt werden, sofern diese Funkionsteile selbst eine gewisse Stabilität aufweisen und zur Anbringung eines Funktionsteil-Schlosses und einer Funktionsteil-Einsteckzunge geeignet sind. Besonders geeignete Funktionsteile sind eine Mittelarmkonsole als Multifunktionskonsole oder ein Grundkasten zur Aufnahme von Funktionselementen. Weiter kann als Funktionsteil ein Träger- und/oder Adapterteil verwendet sein, das mit Funktionselementen ergänzbar ist. Als Funktionsteil ist besonders auch ein Kinder-Fangkörper, insbesondere ein Kinder-Fangtisch geeignet.

Um den Halt eines Funktionsteil auf einem mittleren Sitzplatz einer Fondsitzbank weiter zu verbessern, kann es vorteilhaft sein, als zusätzliches, frontseitiges Befestigungsteil eines Funktionsteils einen fahrzeugindividuell gestalteten und mit dem Funktionsteil verbindbaren oder verbundenen Stützfuß als Mitteltunnelauflage vorzusehen. Einen besonders festen Halt ergibt ein Stützfuß, der zangenförmig ausgebildet ist und mit einem Klemmschluß den Mitteltunnel von oben und jeweils seitlich übergreift. Mit einer solchen zusätzlichen Befestigung über einen Stützfuß sind auch große und schwerere Funktionsteile, wie eine Mittelarmkonsole als Multifunktionskonsole stabil und sicher zu befestigen. Dabei kann auch noch ein zusätzliches, heckseitiges Befestigungsteil als Steckfortsatz am Funktionsteil vorgesehen sein, das in einen Spalt zwischen dem Sitzpolster und einem angrenzenden Lehnenpolster der Fondsitzbank einsteckbar ist.

Anhand einer Zeichnung wird die Erfindung näher erläutert.

Es zeigen:
- Fig. 1: eine schematische, perspektivische Darstellung einer als Multifunktionsbox ausgebildeten Mittelarmkonsole,
- Fig. 2: eine schematische Seitenansicht einer auf einer Fondsitzbank befestigten Mittelarmkonsole,
- Fig. 3: eine schematische, perspektivische Darstellung eines Kinder-Fangtisches, und
- Fig. 4: eine schematische, perspektivische Darstellung eines auf einer Fondsitzbank befestigten Kinder-Fangtisches.

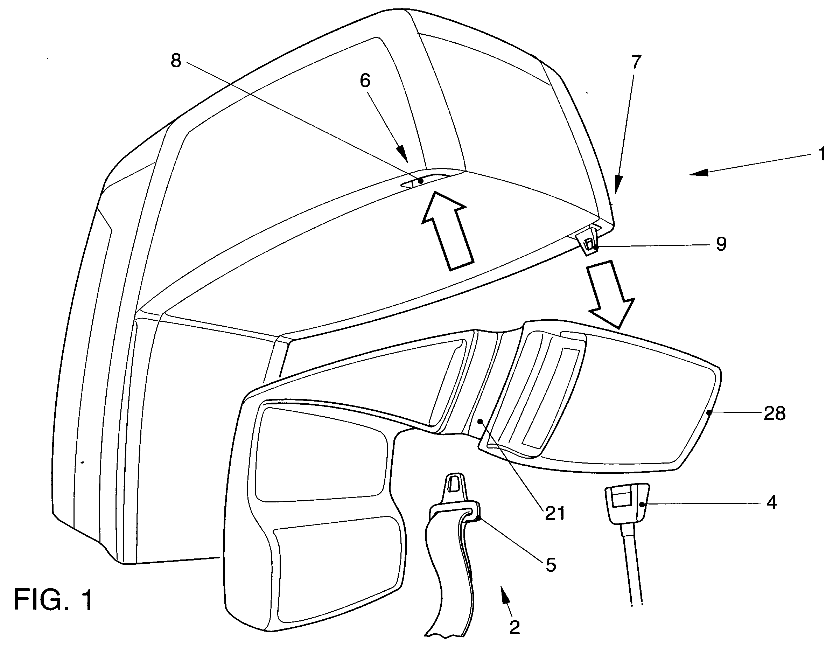

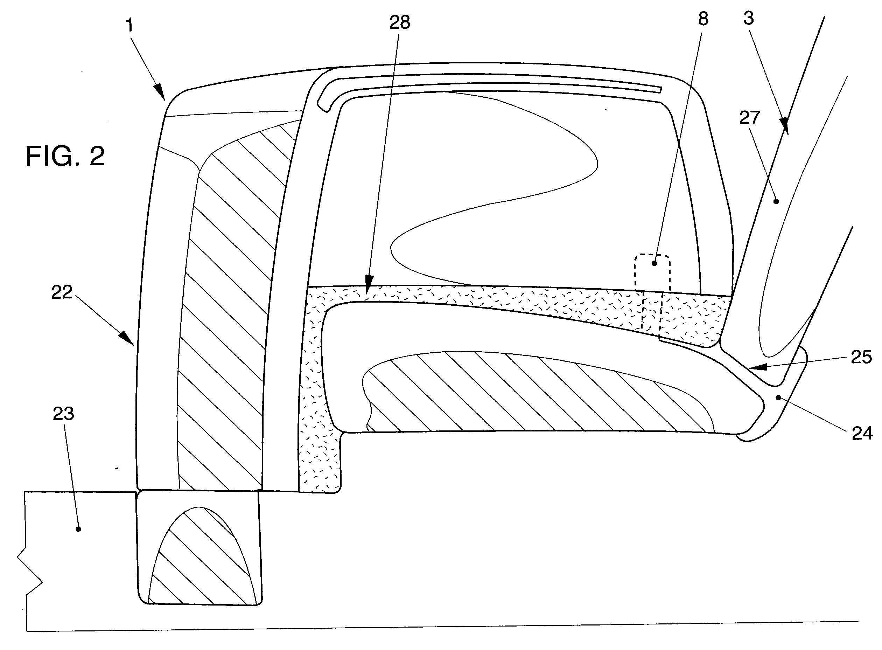

In der Fig. 1 ist eine als Multifunktionsbox ausgebildete Mittelarmkonsole 1 als Funktionsteil dargestellt, die, wie dies aus der Fig. 2 ersichtlich ist, auf einer Fondsitzbank 3 eines Kraftfahrzeugs befestigbar ist.

Diese Befestigung der Mittelarmkonsole 1 erfolgt mit einem längsverstellbaren Mittenbeckengurt 2. Der Mittenbeckengurt 2 umfaßt ein Gurtschloß 4 und eine dem Gurtschloß 4 zugeordnete Gurt-Einsteckzunge 5, die jeweils an den Enden des zweigeteilten, längsverstellbaren Mittenbeckengurts 2 angeordnet sind. Gurtschloß 4 und Gurt-Einsteckzunge 5 des Mittenbeckengurts 2 sind auf an sich bekannte Weise an der Fondsitzbank 3 befestigt.

Wie dies der Fig. 1 entnommen werden kann, ist an der Mittelarmkonsole 1 zur Aufnahme der Gurt-Einsteckzunge 5 an einem heckseitigen Seitenbereich 6 ein Mittelarmkonsolen-Schloß 8 versenkt angebracht. Dieses Mittelarmkonsolen-Schloß 8 ist entsprechend dem Gurtschloß 4 ausgebildet. Weiter ist an der Mittelarmkonsole 1 an einem dem heckseitigen Seitenbereich 6 gegenüberliegenden heckseitigen Seitenbereich 7 eine Mittelarmkonsolen-Einsteckzunge 9 angeordnet. Diese Mittelarmkonsolen-Einsteckzunge 9 ragt hier nach unten von der Mittelarmkonsole 1 weg, kann aber in einer hier nicht dargestellten, alternativen Ausführungsform auch versenkt angeordnet sein. Zum Einstecken in das Gurtschloß 4 ist die Mittelarmkonsolen-Einsteckzunge 9 entsprechend der Gurt-Einsteckzunge 5 des Mittenbeckengurts 2 ausgebildet.

Für eine Befestigung der Mittelarmkonsole 1 auf der Fondsitzbank 3 wird die Gurt-Einsteckzunge 5 in das Mittelarmkonsolen-Schloß 8 und das Gurtschloß 4 in die Mittelarmkonsolen-Einsteckzunge 9 eingebracht und anschließend eine feste und stabile Verbindung durch Straffen des Mittenbeckengurts 2 hergestellt.
Wie dies aus der Fig. 2 weiter ersichtlich ist, ist die als Multifunktionsbox ausgebildete Mittelarmkonsole 1 mit einem zusätzlichen, frontseitigen Befestigungsteil 22 in Form eines fahrzeugindividuell gestalteten Stützfusses als Auflage für einen Mitteltunnel 23 versehen. Dieser Stützfuß 22 ist zangenförmig ausgebildet und übergreift den Mitteltunnel 23 von oben und jeweils seitlich mit einem Klemmschluß.

Wie dies aus den Fig. 1 und 2 entnommen werden kann, ist zur Anpassung der Mittelarmkonsole 1 an unterschiedliche Sitzkonturen der Fondsitzbank 3 eine fahrzeugindividuell gestaltete Sitzauflage 28 vorgesehen, die aus einem elastischen Schaumstoffmaterial hergestellt ist. Die Unterfläche dieser Sitzauflage 28 entspricht dabei der Sitzkontur der Fondsitzbank 3, während die Oberfläche der Sitzauflage 28 eine Aufstandsfläche für die Mittelarmkonsole 1 bildet.

Die Sitzauflage 28 weist im heckseitigen Endbereich jeweils an gegenüberliegenden Seitenflächen Ausnehmungen 21 auf, damit das Gurtschloß 4 und die Gurt-Einsteckzunge 5 ungehindert durch die Sitzauflage 28 mit der Mittelarmkonsolen-Einsteckzunge 9 bzw. dem Mittelarmkonsolen-Schloß 8 an der Aufstandsfläche der Mittelarmkonsole 1 verbunden werden können.

Als weiteres zusätzliches, heckseitiges Befestigungsteil 24 ist ein fahrzeugindividuell gestalteter, mit der Sitzauflage 28 im hinteren, unteren Bereich verbundener Steckfortsatz 24 verwendbar, wie dies in der Fig. 2 dargestellt ist. Dieser Steckfortsatz 24 ist in einen Spalt 25 zwischen dem Sitzpolster 26 und einem angrenzenden Lehnenpolster 27 der Fondsitzbank 3 einsteckbar und sorgt für eine zusätzliche stabile Befestigung der Mittelarmkonsole 1 auf der Fondsitzbank 3.

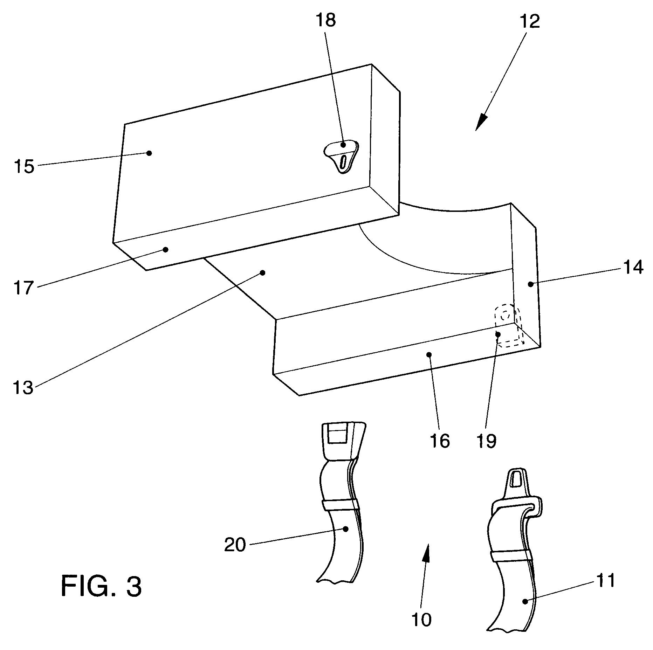

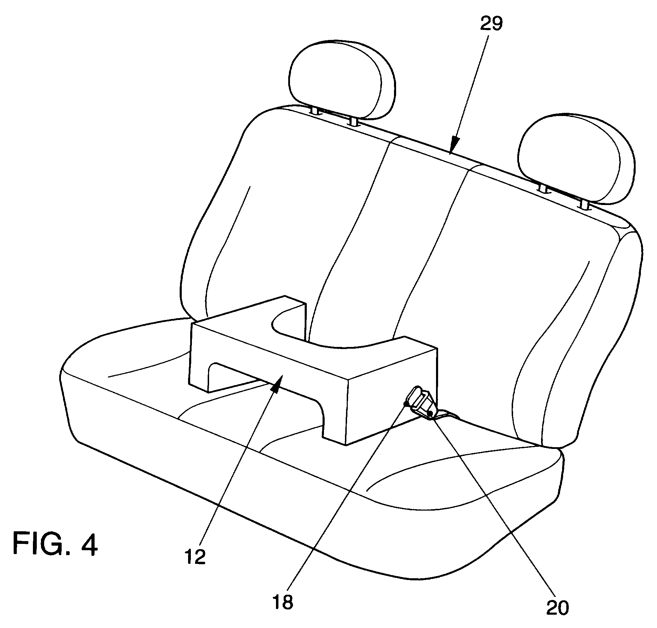

In einer in der Fig. 3 dargestellten, alternativen Ausführungsform ist als Funktionsteil ein Kinder-Fangtisch 12 vorgesehen. Dieser Kinder-Fangtisch 12 ist U-förmig aufgebaut und besteht aus einer Tischplatte 13 mit Ausnehmung als U-Basis und Seitenwangen 14, 15 als U-Schenke. Der Kinder-Fangtisch 12 wird mit den Aufstandsflächen 16, 17 der Seitenwangen 14, 15 auf einer in der Fig. 4 dargestellten Fondsitzbank 29 im Bereich eines längsverstellbaren Mittenbeckengurtes 10 einer mittleren Sitzposition befestigt.

Zur Befestigung des Kinder-Fangtisches 12 an der Fondsitzbank 29 ist an einem heckseitigen Seitenflächenbereich der Seitenwange 15 eine Fangtisch-Einsteckzunge 18 angeordnet. Diese Fangtisch-Einsteckzunge 18 ist entsprechend einer Gurt-Einsteckzunge 11 des Mittenbeckengurts 10 ausgebildet. Weiter ist an einem heckseitigen Seitenflächenbereich der Seitenwange 16 ein hier strichliert eingezeichnetes Fangtisch-Schloß 19 angeordnet, das entsprechend dem Gurtschloß 20 des Mittenbeckengurts 10 ausgebildet ist. Alternativ kann dieses Fangtisch-Schloß 20 ebenso wie die Fangtisch-Einsteckzunge 18 auch in den Seitenwangen 15, 16 versenkt angeordnet sein.

Zum Montieren des Kinder-Fangtisches 12 auf der Fondsitzbank 29 wird die Gurt-Einsteckzunge 11 in das Fangtisch-Schloß 19 und die Fangtisch-Einsteckzunge 18 in das Gurtschloß 20 eingesteckt sowie anschließend eine feste und stabile Verbindung durch Straffen und Verkürzen des Mittenbeckengurts 10 hergestellt. Bevorzugt sind hier sowohl das Gurtschloß 20 als auch die Gurt-Einsteckzunge 11 längenverstellbar ausgeführt.

## Patentansprüche

1. Funktionsteil zur Befestigung auf einer Fondsitzbank mit einem Mittenbeckengurt eines Kraftfahrzeugs, wobei die Mittenbeckengurtanordnung am mittleren Sitzplatz der Fondsitzbank ein Gurtschloß und eine zugeordnete Gurt-Einsteckzunge am Ende eines längenverstellbaren Beckengurts aufweist, der in Halterungen am Funktionsteil eingreift, dadurch gekennzeichnet,
daß als Halterungen am Funktionsteil (1: 12) ein Funktionsteil-Schloß (8, 19) entsprechend dem Gurtschloß (4; 20) zur Aufnahme der Gurt-Einsteckzunge (5; 11) und eine Funktionsteil-Einsteckzunge (9; 18) entsprechend der Gurt-Einsteckzunge (5; 11) zum Einstecken in das Gurtschloß (4; 20) angebracht sind und für eine Befestigung diese Verbindungen hergestellt und der Beckengurt (2; 10) durch Verkürzen gestrafft wird.

2. Funktionsteil nach Anspruch 1, dadurch gekennzeichnet, daß das Funktionsteil-Schloß (8; 19) und die Funktionsteil-Einsteckzunge (9; 18) am Funktionsteil (1; 12) versenkt angeordnet sind, so daß keine Halterungen am Funktionsteil (1; 12) vorstehen.

3. Funktionsteil nach Anspruch 1 oder Anspruch 2, dadurch gekennzeichnet, daß das Funktionsteil-Schloß (8; 19) und die Funktionsteil-Einsteckzunge (9; 18) gegenüberliegend an heckseitigen Seitenbereichen (6, 7) des Funktionsteils (1; 12) nach unten gerichtet sind.

4. Funktionsteil nach einem der Ansprüche 1 bis 3, dadurch gekennzeichnet, daß das Funktionsteil eine Mittelarmkonsole (1) als Multifunktionskonsole oder ein Grundkasten zur Aufnahme von Funktionselementen oder ein Träger- und/oder Adapterteil für Funktionselemente oder ein Kinder-Fangkörper, bevorzugt ein Kinder-Fangtisch (12) ist.

5. Funktionsteil nach einem der Ansprüche 1 bis 4, dadurch gekennzeichnet, daß als zusätzliches frontseitiges Befestigungsteil eines Funktionsteils (1) ein jeweils fahrzeugindividuell gestalteter, mit dem Funktionsteil (1) verbindbarer oder verbundener Stützfuß (22) als Mitteltunnelauflage vorgesehen ist.

6. Funktionsteil nach Anspruch 5, dadurch gekennzeichnet, daß der Stützfuß (22) zangenförmig ausgebildet ist und mit einem Klemmschluß den Mitteltunnel (23) von oben und jeweils seitlich übergreift.

7. Funktionsteil nach einem der Ansprüche 1 bis 6, dadurch gekennzeichnet, daß als zusätzliches heckseitiges Befestigungsteil ein jeweils fahrzeugindividuell gestalteter, mit dem Funktionsteil im hinteren unteren Bereich verbindbarer oder verbundener Steckfortsatz vorgesehen ist und dieser Steckfortsatz in einen Spalt zwischen dem Sitzpolster und einem angrenzenden Lehnenpolster der Fondsitzbank einsteckbar ist.
